# EUROPEAN PATENT APPLICATION

(11) **EP 3 940 225 A1**
(43) Date of publication of application: **19.01.2022**
(21) Application number: 21184946.8
(22) Date of filing: 12.07.2021
(51) Int. Cl.: F03B 13/26

(54) **SYSTEM AND METHOD FOR GENERATION OF POWER UTILIZING LUNAR GRAVITY**

(30) Priority: 15.07.2020 US 202016929346; 23.11.2020 US 202017101309
(71) Applicant: Denis, David, R., Lincolnshire, IL 60069-3848 (US)
(72) Inventor: Denis, David, R., Lincolnshire, IL 60069-3848 (US)
(74) Representative: Berggren Oy

(57) **Abstract**

A system and method for generation of power utilizing lunar gravity has a first reservoir and a second reservoir connected by a pipeline. The pipeline is able to transfer water or other fluid from the first reservoir to the second reservoir as the lunar gravity of the moon changes in relation to the first reservoir and the second reservoir and the positions of the reservoirs is not dependent upon a location of a body of water. A generator is located within the pipeline to harness the power created by the flow of water or other fluid between the reservoirs. The generator is connected to a power grid so that the power can be utilized. A method of directly harnessing the power of lunar gravity uses a first reservoir, a second reservoir, a pipeline connecting the two reservoirs, and a generator which is connected to a power grid.

## Description

### FIELD OF THE INVENTION

This invention relates to a system and method for generation of power utilizing lunar gravity and more particularly, this invention relates to a system and method for generation of power utilizing lunar gravity that strategically places two reservoirs in positions remote from each other, in which the moon's gravitational pull are different, a pipeline connecting the two reservoirs, a water turbine connected within the pipeline to generate power, and the system being connected to a power grid.

### BACKGROUND OF THE INVENTION

The production of power is important to the overall functioning of society. Many aspects of daily life rely on the production of power. As the demand for power increases, so does the need to produce it efficiently. In the production of power, there can be harm or damage to the environment and a depletion of the finite number of natural resources that are available (natural gas, coal, oil, etc.). Thus, there is a need to produce power, but reduce the overall impact on the Earth, its environment, and its natural resources. A system and method for generation of power that is efficient, but limits harm to the environment and limits the depletion of natural resources will be a useful invention.

Also, the production of power can create a significant amount of carbon dioxide and other greenhouse gas emissions. Carbon dioxide and greenhouse gases can cause significant harm to the ozone layer and the Earth's environment as a whole. Yet, the demand for power is increasing and its production must increase as well. A system and method that creates power, but does not create a significant amount, or any, carbon dioxide or greenhouse gas emissions will be a useful invention.

As the moon rotates around the Earth, it exerts a gravitational force on the Earth. Efforts to harness the power of the moon's gravitational force on the Earth are fraught with problems and limitations which make the use of the power generated by lunar gravity very limited. A system and method of directly harnessing the power of the moon's gravitational force on the Earth that is self-contained to eliminate or significantly reduce problems such as, but not limited to, being contaminated by the surrounding water and interfering with marine traffic will be a useful invention.

The rising and falling of tides has been known to man for many millennia. Efforts to harness this energy have been many and varied, but for the most part they are unsatisfactory because of the limited rise and fall of tides in most places, and the salt water that contains extraneous material and is corrosive on any system used. A system and method that can harness the power of lunar gravity, but not be limited to the physical components being dependent upon the location of a body of water will be a useful invention.

Systems that use tidal energy are known. However, one of the drawbacks of these systems is that they do not directly harness the energy of the lunar gravity. Tidal energy is spread over the entire oceanic system, so that in any location the tide is small, making it difficult to utilize the energy for practical purposes. A system and method for accessing the lunar energy directly and making it economically feasible to use commercially will be more effective and a useful invention.

### SUMMARY OF THE INVENTION

Among the objectives of the present invention is the provision of a system and method for generation of power utilizing lunar gravity which harnesses the power created by lunar gravity to generate power.

Moreover, an objective of the present invention is the provision of a system and method for generation of power utilizing lunar gravity which strategically places two reservoirs at different positions where the effect of the moon's gravitation pull on the Earth differ, connects the two reservoirs with a pipeline to allow a water turbine to generate power through the flow of water between the two reservoirs, and connects the water turbine to a power grid.

A further objective of the present invention is the provision of a system and method for generation of power utilizing lunar gravity which uses a naturally occurring and renewable resource to generate the power.

A still further objective of the present invention is the provision of a system and method for generation of power utilizing lunar gravity which results in minimal depletion of the Earth's natural resources and minimal damage to the Earth's environment.

Moreover, an objective of the present invention is the provision of a system and method for generation of power utilizing lunar gravity which harnesses the gravitational power of the moon to produce power in a useful and controlled way.

Also, an objective of the present invention is the provision of a system and method for generation of power utilizing lunar gravity with an expected use for the generation of electricity, but this invention covers any and all other end uses for the power captured.

Furthermore, an objective of the present invention is the provision of a system and method for generation of power utilizing lunar gravity which does not produce, or produces very little, carbon dioxide and other harmful greenhouse gases.

Also, an objective of the present invention is the provision of a system and method for generation of power utilizing lunar gravity which does not require the physical components of the system to be dependent upon the location of a body of water.

Yet, another objective of the present invention is the provision of a system and method for generation of power utilizing lunar gravity which directly harnesses the lunar gravity which makes it more effective and economically feasible to use commercially.

Finally, an objective of the present invention is the provision of a method for generation of power utilizing lunar gravity.

These and other objectives of the invention (which other objectives become clear by consideration of the specification, drawings, abstract, and claims as a whole) are met by the present invention.

### BRIEF DESCRIPTION OF THE DRAWINGS

Figure 1 depicts a relational view between the system and method for generation of power utilizing lunar gravity 100 of this invention and various positions of the moon, at various times.
Figure 2 depicts a schematic view of the first reservoir 110, second reservoir 120, pipeline 130, water turbine or generator 140, and power grid 150.
Figure 3 depicts a block diagram of method 200 of this invention.

Throughout the figures of the drawings, where the same part appears in more than one figure of the drawings, the same number is applied thereto.

### DETAILED DESCRIPTION OF THE PREFERRED EMBODIMENTS

Reference will now be made in detail to several embodiments of the invention that are illustrated in accompanying drawings. Whenever possible, the same or similar reference numerals are used in the drawings and the description to refer to the same or like parts or steps. The drawings are in simplified form and are not to precise scale. For purposes of convenience and clarity only, directional terms such as top, bottom, left, right, up, over, above, below, beneath, rear, and front, may be used with respect to the drawings. These and similar directional terms are not to be construed to limit the scope of the invention in any manner. The words attach, connect, couple, and similar terms with their inflectional morphemes do not necessarily denote direct or intermediate connections, but may also include connections through mediate elements or devices.

Throughout the application (both previously and hereinafter), the term "directly" will be used in relation to harnessing the lunar gravity or harnessing the energy from the lunar gravity. The term directly is defined as the lunar gravity acting on the system of the system and method for generation of power utilizing lunar gravity without any intermediary structure, tidal effect, or other natural effect. In other words, the lunar gravity acts on the system and method for generation of power utilizing lunar gravity without creating the tides and then using the tidal energy to generate power.

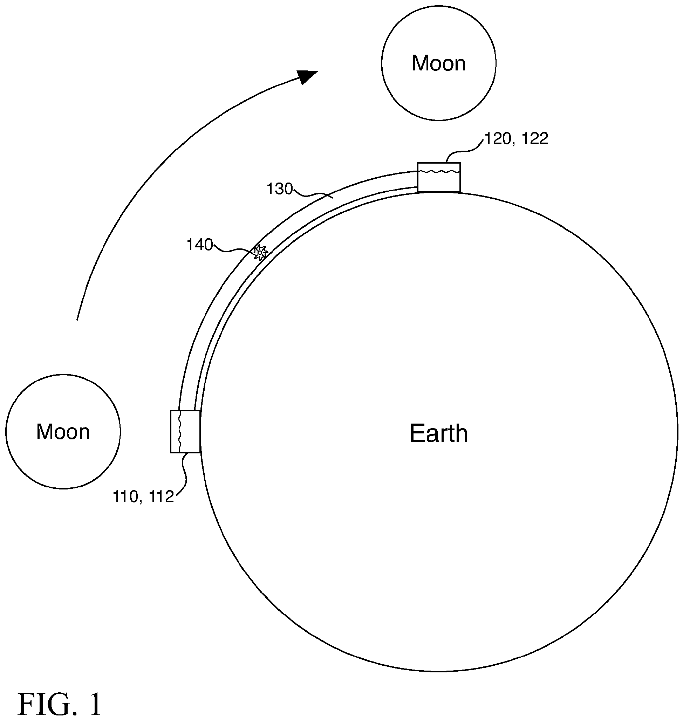

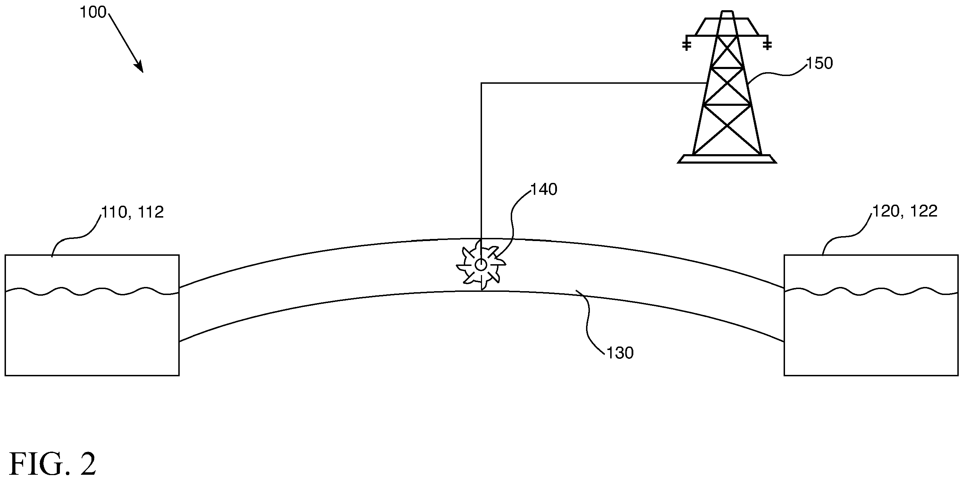

Now adding Figure 1 and Figure 2 to the consideration, the structure and function of the system and method for generation of power utilizing lunar gravity 100 (hereinafter "system and method 100") can be clearly seen. System and method 100 directly harnesses the effect of lunar gravity and does not use tidal energy to generate power.

System and method 100 has first reservoir 110 placed in first position 112 and second reservoir 120 placed in second position 122. A pipeline 130 connects first reservoir 110 and second reservoir 120.

Reservoirs 110 and 120, pipeline 130, and water turbine or generator 140 are a closed system. Water is placed in reservoir 110, reservoir 120, or both and this water flows between reservoir 110 and reservoir 120 through pipeline 130 as the effect of the lunar gravity shifts with the orbit of the moon and the rotation of the Earth.

Throughout this disclosure, system and method 100 is described as producing power. Power can be any suitable form of power including, but not limited to, electricity and all such forms are encompassed by this disclosure.

Water is placed in reservoir 110 and/or 120 via any suitable method such as an aperture (which can be opened to receive water and closed to create the closed system) in reservoir 110 and/or 120, but any suitable method can be used and is encompassed by this disclosure.

Throughout this disclosure, system and method 100 is depicted with two reservoirs 110 and 120, one pipeline 130, and one water turbine or generator 140. However, system and method 100 can have more than two reservoirs, more than one pipeline, and more than one water turbine. Also, the one or more water turbines can be connected to one or more power grids. All such numbers of reservoirs, pipelines, water turbines, and power grids are encompassed by this disclosure.

First position 112 and second position 122 are locations at which reservoirs 110 and 120 are strategically placed to directly harness the power of lunar gravity. In Figure 1, when the moon is directly above first reservoir 110, the first reservoir 110 has a higher water level than when the moon is not directly over first reservoir 110. As the relative position of the moon varies toward second position 122, water in first reservoir 110 flows through pipeline 130 and enters second reservoir 120. This process repeats with the rotation of the Earth and the orbit of the moon.

In Figure 1, first reservoir 110 is shown at the equator and second reservoir 120 is shown on the equator 90 degrees from reservoir 110. This is for exemplary purposes only and is not meant to limit the scope of the invention in any manner. Figure 1 illustrates the maximum distance that can be achieved between the reservoirs 110 and 120 on the Earth. In this configuration the system and method 100 will achieve the maximum power that can be achieved in one cycle (an approximately 24-hour period). As a practical matter, this maximum configuration may be difficult to build, due to the geography of the Earth such as mountains, oceans, etc. However, the same principal will apply for a system and method 100 built with the reservoirs 110 and 120 closer together and any suitable position for reservoirs 110 and 120 are encompassed by this disclosure.

The exact position 112 of first reservoir 110 and the exact position 122 of second reservoir 120 must be at sufficient distance apart latitudinally to allow for two different effects of the lunar gravity, thereby allowing water flow within the pipeline 130 and through the water turbine or generator 140. It is preferred that reservoir 110 and reservoir 120 are at the same level along a latitudinal plane, or at a level in which if all of the water is at one end of the system, either at reservoir 110 or 120, it does not overflow the reservoir.

System and method 100 allows for the position 112 of first reservoir 110 and the position 122 of the second reservoir 120 to be strategically placed in locations for optimal recovery of lunar energy. System and method 100 does not lose effectiveness by making tides first and then, using the tides to generate power.

Since first reservoir 110 and second reservoir 120 are positioned at the same level relative to the Earth or at a level in which if all of the water is at one end of the system, either at reservoir 110 or 120, it does not overflow the reservoir and strategically positioned so that there is a different effect of the moon's gravity on each of the two reservoirs 110 and 120, the direct transfer of energy from the moon's gravity to the system of system and method 100 also improves efficiency.

System and method 100 does not rely on tides to generate power. Reservoirs 110 and 120 are preferred to be man-made reservoirs that can be positioned anywhere that is strategically desired. The position of the system of system and method 100 is not dependent on a location of a body of water and is not limited to being placed in or in proximity to a body of water. System and method 100 offers great flexibility in being able to be positioned anywhere in which the effect of the lunar gravity on reservoir 110 is different than the effect on reservoir 120. For example, the system of system and method 100 can be placed in a desert or in a corn field and these examples are meant to be exemplary and not limit the scope of the invention in any manner and all suitable positions for reservoir 110 and 120 are encompassed by this disclosure.

Furthermore, the desired strength of the lunar gravity is determined by the positions 112 and 122 of the two reservoirs 110 and 120 and is not restricted by the location of any body of water. This flexibility is further enhanced by the lunar gravity acting directly on the system of system and method 100.

As water shifts between reservoir 110 and 120 due to the effect of the lunar gravity, water turbine or generator 140 is activated. Water turbine or generator 140 is strategically placed in pipeline 130 so that it can generate maximum power from the flow of water between reservoir 110 and 120. It is preferred, but not required, that the water turbine or generator 140 be of sufficient size to encompass all or a near majority, which means 75 percent or greater, of the volume of the pipeline 130.

Water turbine or generator 140 is a generator that creates power and this power is transferred from water turbine or generator 140 to power grid 150 to be transmitted for use. Water turbine or generator 140 is depicted as a water turbine, but can be any generator suitable for use with system and method 100, and all such generators are encompassed by this disclosure.

Throughout this disclosure, water fills reservoir 110 and reservoir 120. However, any suitable liquid can be used to fill reservoir 110 and reservoir 120 and all such liquids are encompassed by this disclosure. However, it is preferred that fresh water be used to fill reservoir 110 and reservoir 120 to minimize the harmful effects of salt water due to its corrosive nature and other possible contaminants. In addition there is less friction loss if fresh water is used than if salt water is used, and this advantage may be increased by the use of chemical additives that reduce friction loss.

System and method 100 uses the effect of lunar gravity directly, and thus is more efficient in converting the lunar gravity to useful energy. System and method 100 bypasses the tidal effect entirely and utilizes the lunar energy more directly and is not dependent upon the location of a body of water. With system and method 100, the desired strength of lunar gravity can be selected by the positions 112 and 122 of reservoirs 110 and 120, and is not restricted by the location of any body of water.

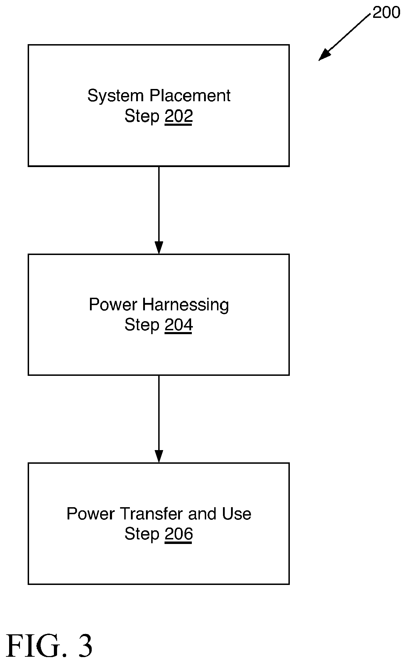

Now adding Figure 3 to the consideration, method 200 of this invention can be clearly seen. As will be obvious to persons of ordinary skill in the art, the steps, or steps equivalent thereto, may be practiced in any reasonable order which will produce the desired result.

STEP 202 is the system placement step. In this STEP 202, first reservoir 110 is placed in position 112 and second reservoir 120 is placed in position 122. The gravity of the moon will be different at the two locations (112 and 122) as the position of the moon changes. Reservoir 110 and 120 are connected via pipeline 130 and within pipeline 130 is one or more water turbines or generators 140. The one or more water turbines or generators 140 are connected to one or more power grids 150. Water or other fluid is placed in reservoir 110, 120 or both. The individual components of system and method 100 can be set up in any desired order.

STEP 204 is the power harnessing step. In this STEP 204, as the position of the moon varies in relation to reservoir 110 and 120, water is transferred between the two via pipeline 130. The one or more water turbines or generators 140 harness the power of the flow of water during each transfer of water between reservoirs 110 and 120.

STEP 206 is the power transfer and use step. In this STEP 206, as the one or more water turbines or generators 140 harness the power from the flow of water between reservoirs 110 and 120, the power is transferred to power grid 150. From power grid 150, the power is converted to a useable form and distributed for use.

This application - taken as a whole with the abstract, specification, claims and drawings being combined - provides sufficient information for a person having ordinary skill in the art to practice the invention as disclosed herein. Any measures necessary to practice this invention are well within the skill of a person having ordinary skill in this art after that person has made a careful study of this disclosure.

Because of this disclosure, and solely because of this disclosure, modification of this system and method can become clear to a person having ordinary skill in this particular art. Such modifications are clearly covered by this disclosure.

## Claims

1. A system for generation of power utilizing lunar gravity comprising:
a) directly harnessing a power of lunar gravity, wherein there are two reservoirs at a same level or at a level in which if all of a fluid placed within one or both reservoirs is at one end of the system, at either of the two reservoirs, it does not overflow the reservoir, but in different locations relative to a gravity of a moon, further wherein the two reservoirs are connected by a pipeline, further wherein the locations of the two reservoirs are not dependent upon a location of a body of water, further wherein at least one generator is located within the pipeline and the at least one generator is connected to at least one power grid.

2. A system for generation of power utilizing lunar gravity comprising:
a) a first reservoir and a second reservoir connected by a pipeline, wherein fluid is contained within the first reservoir, the second reservoir, or both, and further wherein the pipeline is able to transfer fluid between the first reservoir and the second reservoir;
b) at least one generator located within the pipeline, wherein the at least one generator is connected to at least one power grid;
c) the first reservoir and the second reservoir each being positioned at a different location in relation to the other, wherein lunar gravity affects each reservoir differently based on a position of a moon relative to a position of each reservoir, and further wherein the position of the first reservoir and the second reservoir is not dependent upon a location of a body of water;
d) wherein fluid transfers between the first reservoir and the second reservoir as the position of the moon changes relative to the first reservoir and the second reservoir, and further wherein the at least one generator harnesses a power of the transfer of fluid between the first reservoir and the second reservoir; and
e) lunar gravity acts directly upon the system.

3. The system of Claim 2 further comprising:
a) the at least one generator being at least one water turbine.

4. The system of Claim 3 further comprising:
a) the first reservoir, the second reservoir, the pipeline, and the at least one generator being a closed system.

5. The system of Claim 4 further comprising:
a) the first reservoir, the second reservoir, the pipeline, and the at least one water turbine being a closed system.

6. A method for generation of power utilizing lunar gravity comprising:
a) placing a first reservoir and a second reservoir at different positions, wherein lunar gravity affects each reservoir differently based on a position of a moon relative to the position of each reservoir, further wherein the position of the first reservoir and the second reservoir is not dependent upon a location of a body of water;
b) connecting the first reservoir and the second reservoir via a pipeline, wherein at least one generator is contained within the pipeline, and further wherein the at least one generator is connected to at least one power grid, and further wherein the first reservoir, the second reservoir, the pipeline, and the at least one generator are a system and lunar gravity acts directly upon the system;
c) placing fluid within the first reservoir, the second reservoir, or both;
d) harnessing a flow of fluid between the first reservoir and the second reservoir, wherein fluid is transferred between the first reservoir and the second reservoir and vice versa as the position of the moon relative to the first reservoir and the second reservoir changes; and
e) transferring a power harnessed by the at least one generator to the at least one power grid, wherein the power is converted to a usable form and distributed.

7. The method of Claim 6 further comprising:
a) the at least one generator being at least one water turbine.

8. The method of Claim 6 further comprising:
a) the first reservoir, the second reservoir, the pipeline, and the at least one generator being a closed system.

9. The method of Claim 7 further comprising:
a) the first reservoir, the second reservoir, the pipeline, and the at least one water turbine being a closed system.
